# EUROPEAN PATENT APPLICATION

(11) **EP 4 818 259 A1**
(43) Date of publication of application: **07.10.2026**
(21) Application number: 24897920.5
(22) Date of filing: 31.10.2024
(51) Int. Cl.: C08L 67/02, C08K 5/12, C08L 53/00, C08L 25/14, C08G 63/16, C08G 63/199, C08G 63/183

(54) **RESIN COMPOSITION**

(30) Priority: 30.11.2023 KR 20230171567
(71) Applicant: SK Chemicals Co., Ltd., Seongnam-si, Gyeonggi-do 13494 (KR)
(72) Inventor: KIM, Hae-Ri, Seongnam-si, Gyeonggi-do 13494 (KR); KIM, Sung-Gi, Seongnam-si, Gyeonggi-do 13494 (KR); SHIN, Yong-Jun, Seongnam-si, Gyeonggi-do 13494 (KR); LEE, Se-Ho, Seongnam-si, Gyeonggi-do 13494 (KR)
(74) Representative: Dehns
(86) International application number: PCT/KR2024/016912
(87) International publication number: WO 2025/116323

(57) **Abstract**

The present invention relates to a resin composition comprising a polyester copolymer and a plasticizer. Particularly, according to an embodiment of the present invention, the resin composition comprises: an eco-friendly polyester copolymer; and 0.1-50 parts by weight of a plasticizer with respect to 100 parts by weight of the polyester copolymer, and thus, a specimen manufactured using the resin composition has a Shore A hardness of less than 95 while having excellent moldability and processability, and thus liquid-form plasticizer's migration does not occur on the surface of the specimen, enabling easy application in various fields.

## Description

### Technical Field

The present invention relates to a resin composition that is environmentally friendly and has excellent moldability and processability.

### Background Art

Polyvinyl chloride (PVC) is colorless and transparent and has excellent strength. It is easy to adjust its desired physical properties depending on the type of additives mixed during processing; thus, it is used in various industrial fields. For example, as a certain amount of a plasticizer, which is a softening component to PVC, is added, it is possible to produce soft PVC that can be used to manufacture flexible products such as packaging films, shower curtains, and the like. When 10% by weight or less of a plasticizer is added, hard PVC, such as plumbing materials, can be produced. As described above, PVC has excellent productivity and processability in that softness and hardness can be easily controlled by simply adjusting the content of a plasticizer without additional processes.

However, plasticizers used to control the softness and hardness of PVC may reduce the moldability or processability of the PVC. In particular, since the amount of plasticizer used to secure sufficient rigidity is large, migration may take place in which the liquid plasticizer moves or is extracted from the surface of a product during the extrusion process; thus, there are limitations to the uses to which it can be applied. In addition, since PVC produces dioxin, a toxic substance, when burned, there is no way to dispose of it other than landfill. Accordingly, there is a need to develop a material that can replace PVC and has excellent moldability and processability even when plasticizers are used.

Meanwhile, since polyester has excellent mechanical properties such as durability and thermal resistance, and excellent optical properties such as transparency, it is widely used in various industrial materials such as display devices, as well as materials such as fibers, films, packaging materials, molded articles, building materials, and interior and exterior materials. In addition, polyester is attracting attention as a material that can replace PVC: for, it is environmentally friendly since it can reuse resources through methods such as mechanical recycling and chemical recycling and has excellent mechanical and optical properties as compared with PVC. However, it is not easy to control softness or hardness. Accordingly, research on polyester that can effectively control softness and hardness continues.

As an example, Korean Laid-open Patent Publication No. 2013-0122746 discloses a copolyester resin that can control softness or hardness by attaching soft segments or hard segments.

### [Prior Art Document]

### [Patent Document]

(Patent Document 1) Korean Laid-open Patent Publication No. 2013-0122746

### Description of Invention

### Technical Problem

Accordingly, the present invention aims to provide a resin composition that is environmentally friendly, can effectively control softness and hardness, and has excellent moldability and processability even if it contains a plasticizer, making it readily applicable to various purposes.

### Solution to the Problem

The resin composition according to an embodiment of the present invention comprises a polyester copolymer and a plasticizer, wherein the plasticizer is employed in an amount of 0.1 part by weight to 50 parts by weight relative to 100 parts by weight of the polyester copolymer, and the Shore A hardness of a specimen prepared from the resin composition is less than 95 as measured according to ASTM D2240.

A molded article according to another embodiment of the present invention is prepared from the resin composition.

### Advantageous Effects of Invention

As the resin composition according to an embodiment of the present invention comprises an environmentally friendly polyester copolymer and a plasticizer in an amount of 0.1 part by weight to 50 parts by weight relative to 100 parts by weight of the polyester copolymer, it has excellent moldability and processability, making it readily applicable to various purposes.

Specifically, a specimen prepared from the resin composition can secure softness with a Shore A hardness of less than 95. Even though it contains a plasticizer, it has excellent moldability and processability, so that the surface of a strand is smooth and uniform during the extrusion process, and the migration of a liquid plasticizer does not take place on the surface of the specimen, resulting in excellent quality.

In addition, the polyester copolymer comprises a residue of a first dicarboxylic acid component comprising terephthalic acid or a derivative thereof; a residue of a second dicarboxylic acid component comprising cyclohexane dicarboxylic acid, dimethyl cyclohexane dicarboxylate, or a derivative thereof; and a residue of a diol component comprising ethylene glycol or a derivative thereof, wherein the second dicarboxylic acid component is employed in an amount of 30% by mole or more based on the total dicarboxylic acid component. As a result, it is environmentally friendly and is excellent in its mechanical properties such as softness and elasticity; and optical properties such as transparency and UV stability.

### Best Mode for Carrying out the Invention

Hereinafter, the present invention will be described in detail. The present invention is not limited to the disclosures given below, but it may be modified into various forms as long as the gist of the invention is not changed.

Throughout the present specification, when a part is referred to as "comprising" an element, it is understood that other elements may be comprised, rather than other elements are excluded, unless specifically stated otherwise.

All numbers and expressions related to the quantities of components, reaction conditions, and the like used herein are to be understood as being modified by the term "about," unless otherwise indicated.

Throughout the present specification, the terms first, second, and the like are used to describe various components. But the components should not be limited by the terms. The terms are used only for the purpose of distinguishing one component from another.

The term "derivative thereof" as used herein refers to a compound that has been changed from a parent compound by the introduction of functional groups, oxidation, reduction, or substitution of atoms to the extent that the structure and properties of the parent compound are not significantly changed.

### Resin composition

The resin composition according to an embodiment of the present invention comprises a polyester copolymer and a plasticizer, wherein the plasticizer is employed in an amount of 0.1 part by weight to 50 parts by weight relative to 100 parts by weight of the polyester copolymer, and the Shore A hardness of a specimen prepared from the resin composition is less than 95 as measured according to ASTM D2240.

For example, when a flat specimen having a thickness of 1 mm is prepared from the resin composition and measured according to ASTM D2240, the Shore A hardness may be 93 or less, 90 or less, 85 or less, 80 or less, 78 or less, 77 or less, 76 or less, 75 or less, 72 or less, 70 or less, 65 or less, 60 or less, 55 or less, 50 or less, or 40 or less. As the resin composition according to an embodiment of the present invention has a Shore A hardness satisfying the above range, it can secure softness so as to be applied to processes and various fields.

### Polyester copolymer

According to an embodiment of the present invention, the resin composition comprises a polyester copolymer.

Specifically, the polyester copolymer is one in which a first dicarboxylic acid component, a second dicarboxylic acid component, and a diol component comprising ethylene glycol or a derivative thereof are copolymerized. It may be a block copolymer or a random copolymer comprising a residue of the first dicarboxylic acid component, a residue of the second dicarboxylic acid component, and a residue of the diol component comprising ethylene glycol or a derivative thereof.

The first dicarboxylic acid component comprises terephthalic acid (TPA) or a derivative thereof. Specifically, the first dicarboxylic acid component may comprise terephthalic acid or a derivative thereof in an amount of 80% by mole or more, 85% by mole or more, 90% by mole or more, 95% by mole or more, 98% by mole or more, 99% by mole or more, or 100% by mole.

In addition, the polyester copolymer may comprise the first dicarboxylic acid component in an amount of 5% by mole to 70% by mole, 8% by mole to 65% by mole, 10% by mole to 60% by mole, 13% by mole to 55% by mole, or 15% by mole to 50% by mole, based on the total dicarboxylic acid component.

According to an embodiment of the present invention, the second dicarboxylic acid component comprises cyclohexane dicarboxylic acid (CHDA), dimethyl cyclohexane dicarboxylate (DMCD), or a derivative thereof. More specifically, the second dicarboxylic acid component may be 1,4-cyclohexane dicarboxylic acid, dimethyl 1,4-cyclohexane dicarboxylate, or a derivative thereof.

The polyester copolymer according to an embodiment of the present invention comprises, as a dicarboxylic acid component, both of a first dicarboxylic acid component comprising terephthalic acid or a derivative thereof; and a second dicarboxylic acid component comprising cyclohexane dicarboxylic acid, dimethyl cyclohexane dicarboxylate, or a derivative thereof; thus, it is environmentally friendly and can be enhanced in all of its mechanical properties such as softness and elasticity, optical properties such as transparency and UV stability, and processability. In particular, since softness can be effectively controlled by adjusting the content of the second dicarboxylic acid component, productivity and processability are very excellent.

Specifically, the second dicarboxylic acid component comprises cyclohexane dicarboxylic acid, dimethyl cyclohexane dicarboxylate, or a derivative thereof. Specifically, the second dicarboxylic acid component may comprise cyclohexane dicarboxylic acid, dimethyl cyclohexane dicarboxylate, or a derivative thereof in an amount of 80% by mole or more, 85% by mole or more, 90% by mole or more, 95% by mole or more, 98% by mole or more, 99% by mole or more, or 100% by mole.

In addition, the polyester copolymer may comprise the second dicarboxylic acid component in an amount of 20% by mole or more, 25% by mole or more, 30% by mole or more, 50% by mole or more, 65% by mole or more, 70% by mole or more, or 75% by mole or more, and 100% by mole or less, 95% by mole or less, or 90% by mole or less, based on the total dicarboxylic acid component. As the content of the second dicarboxylic acid component satisfies the above range, the softness of the polyester copolymer can be further enhanced.

More specifically, the second dicarboxylic acid component may be dimethyl cyclohexane dicarboxylate, and the polyester copolymer may comprise the dimethyl cyclohexane dicarboxylate in an amount of 20% by mole or more, 25% by mole or more, 30% by mole or more, 35% by mole or more, 45% by mole or more, 60% by mole or more, 65% by mole or more, 70% by mole or more, or 75% by mole or more, and 100% by mole or less, 95% by mole or less, or 90% by mole or less, based on the total dicarboxylic acid component. As the content of dimethyl cyclohexane dicarboxylate or a derivative thereof satisfies the above range, the softness of the polyester copolymer can be further enhanced.

Alternatively, the second dicarboxylic acid component may be cyclohexane dicarboxylic acid, and the polyester copolymer may comprise the cyclohexane dicarboxylic acid in an amount of 20% by mole or more, 25% by mole or more, or 30% by mole or more, and 100% by mole or less, 95% by mole or less, or 90% by mole or less, based on the total dicarboxylic acid component.

According to another embodiment of the present invention, the polyester copolymer may comprise a residue of a third dicarboxylic acid component.

Specifically, the third dicarboxylic acid component may be a dicarboxylic acid component different from the first dicarboxylic acid component and the second dicarboxylic acid component. More specifically, the third dicarboxylic acid component may comprise at least one selected from the group consisting of succinic acid, adipic acid, sebacic acid, azelaic acid, dodecanoic acid, isophthalic acid, orthophthalic acid, naphthalenedicarboxylic acid, dimethyl terephthalate, dimethyl isophthalate, diethyl terephthalate, diethyl isophthalate, dibutyl terephthalate, and dibutyl isophthalate.

In addition, the polyester copolymer may comprise the third dicarboxylic acid component in an amount of 30% by mole or less, 25% by mole or less, 15% by mole or less, 10% by mole or less, 5% by mole or less, 3% by mole or less, or 1% by mole or less, based on the total dicarboxylic acid component.

The diol component comprises ethylene glycol or a derivative thereof. Specifically, the diol component may comprise ethylene glycol or a derivative thereof in an amount of 80% by mole or more, 85% by mole or more, 90% by mole or more, 95% by mole or more, 98% by mole or more, 99% by mole or more, or 100% by mole.

According to another embodiment of the present invention, the polyester copolymer comprises a residue of a first diol component comprising the ethylene glycol or a derivative thereof, and it may comprise a residue of a second diol component that is different from the first diol component.

Specifically, the second diol component may comprise at least one selected from the group consisting of propanediol, butanediol, pentanediol, hexanediol, cyclohexanedimethanol, neopentyl glycol, diethylene glycol, and triethylene glycol. For example, the second diol component may comprise at least one selected from the group consisting of 1,2-propanediol, 1,3-propanediol, 1,2-butanediol, 1,4-butanediol, 1,5-pentanediol, 1,2-hexanediol, 1,3-hexanediol, 1,4-hexanediol, 1,6-hexanediol, 2,3-hexanediol, 2,4-hexanediol, 2,5-hexanediol, 2,6-hexanediol, 3,4-hexanediol, 1,2-cyclohexanedimethanol, 1,3-cyclohexanedimethanol, and 1,4-cyclohexanedimethanol.

In addition, the polyester copolymer may comprise the first diol component in an amount of 80% by mole or more, 85% by mole or more, 90% by mole or more, 95% by mole or more, 98% by mole or more, 99% by mole or more, or 100% by mole.

In addition, the polyester copolymer may comprise the second diol component in an amount of 30% by mole or less, 25% by mole or less, 15% by mole or less, 10% by mole or less, 5% by mole or less, 3% by mole or less, 2% by mole or less, or 1% by mole or less, based on the total diol component.

According to another embodiment of the present invention, the polyester copolymer may be a copolymer further comprising an elastomer or a resin.

For example, the elastomer may be at least one selected from the group consisting of polyvinyl chloride-based elastomers, polyolefin-based elastomers, polyurethane-based elastomers, thermoplastic polyester-based elastomers, polyamide-based elastomers, and polybutadiene-based elastomers. The resin may be at least one selected from the group consisting of polyethylene, polyethylene terephthalate, polybutylene terephthalate, and glycol-modified polyethylene terephthalate.

In addition, the polyester copolymer may comprise the elastomer or the resin in an amount of 0.1% by weight to 50% by weight. For example, the content of the elastomer or the resin may be 0.1% by weight to 50% by weight, 1% by weight to 40% by weight, or 5% by weight to 25% by weight, based on the total weight of the polyester copolymer and the elastomer or the resin.

As a specific example, the polyester copolymer may further comprise a polybutylene terephthalate (PBT) or a thermoplastic polyester-based elastomer (TPEE).

The elastomer or the resin may be added at the end of the polycondensation step in the preparation process of the polyester copolymer and then melt blended. The elastomer or the resin may be added to the polyester copolymer as melt blended to impart crystallinity to the polyester copolymer; thus, there may be more advantageous effects in terms of improving thermal resistance, dimensional stability, and chemical resistance.

The polyester copolymer may have a glass transition temperature (Tg) of 10°C to 70°C when measured by differential scanning calorimetry (DSC). For example, the glass transition temperature (Tg) of the polyester copolymer may be 13°C to 68°C or 15°C to 65°C when measured by differential scanning calorimetry (DSC).

The polyester copolymer may have an intrinsic viscosity (IV) of 0.5 dl/g to 1.3 dl/g. For example, the intrinsic viscosity (IV) of the polyester copolymer may be 0.5 dl/g to 1.3 dl/g, 0.55 dl/g to 1.2 dl/g, or 0.6 dl/g to 1.15 dl/g.

The polyester copolymer may have a specific gravity of 1.2 or more. For example, the specific gravity of the polyester copolymer may be 1.2 or more, 1.21 or more, or 1.22 or more.

The polyester copolymer may have a heat of fusion of 0.01 J/g to 80 J/g. For example, the heat of fusion of the crystallization peak of the polyester copolymer may be 0.01 J/g to 75 J/g, 0.01 J/g to 60 J/g, 0.1 J/g to 55 J/g, 0.5 J/g to 50 J/g, 0.1 J/g to 40 J/g, or 1 J/g to 20 J/g. As the heat of fusion of the polyester copolymer satisfies the above range, sufficient crystallinity can be secured; thus, there may be more advantageous effects in terms of improving thermal resistance, dimensional stability, and chemical resistance.

### Plasticizer

According to an embodiment of the present invention, the resin composition comprises a plasticizer.

Specifically, the plasticizer may comprise at least one selected from the group consisting of phthalate-based, terephthalate-based, adipate-based, carboxylate-based, citric acid-based, trimellitate-based, phosphite-based, epoxy-based, ester-based, polyester-based, aliphatic-based, antichlorine-based, vegetable oil derivatives, petroleum-based, hydrocarbon-based, acid-based, and alcohol-based plasticizers.

For example, the plasticizer may comprise at least one selected from the group consisting of di(2-ethylhexyl)cyclohexane-1,4-dicarboxylate, dioctyl terephthalate, tributyl citrate, diisononyl adipate, dioctyl adipate, adipic acid polyester, hexanoic acid polymer, 1,3-butanediol, 1,2-propnediol, isononyl ester, dioctyl maleate, tri-isononyl trimellitate, trioctyl trimellitate, dioctyl phthalate, dibutyl phthalate, diisononyl phthalate, diisodecyl phthalate, di(2-propylheptyl) phthalate, and di-branched alkyl ester.

More specifically, the plasticizer may comprise at least one selected from the group consisting of dioctyl terephthalate, tributyl citrate, diisononyl adipate, and di(2-ethylhexyl)cyclohexane-1,4-dicarboxylate.

The resin composition comprises the plasticizer in an amount of 0.1 part by weight to 50 parts by weight relative to 100 parts by weight of the polyester copolymer. For example, the content of the plasticizer may be 0.2 part by weight to 50 parts by weight, 0.5 part by weight to 50 parts by weight, 1 part by weight to 50 parts by weight, 3 parts by weight to 50 parts by weight, 5 parts by weight to 50 parts by weight, 5 parts by weight to 40 parts by weight, 10 parts by weight to 50 parts by weight, 15 parts by weight to 30 parts by weight, or 30 parts by weight to 50 parts by weight, relative to 100 parts by weight of the polyester copolymer.

### Elastomer

According to another embodiment of the present invention, the resin composition may further comprise an elastomer.

Specifically, the resin composition may further comprise at least one selected from the group consisting of polyvinyl chloride-based elastomers, polyolefin-based elastomers, polyurethane-based elastomers, thermoplastic polyester-based elastomers, polyamide-based elastomers, and polybutadiene-based elastomers.

For example, the elastomer may be a thermoplastic elastomer (TPE), and it may comprise at least one selected from the group consisting of a thermoplastic polyether block amide (TPA), a thermoplastic polyurethane elastomer (TPU), a thermoplastic copolyester elastomer (TPC), a styrene block copolymer-based thermoplastic elastomer (TPS), a thermoplastic elastomer (TPV) made of a thermoplastic plastic and a vulcanized elastomer, and a polyolefin-based elastomer (TPO).

More specifically, the elastomer may be a styrene ethylene/butylene block copolymer or methacrylate butadiene styrene.

The resin composition may comprise the elastomer in an amount of 0.1 part by weight to 100 parts by weight relative to 100 parts by weight of the polyester copolymer. For example, the content of the elastomer may be 0.2 part by weight to 90 parts by weight, 0.5 part by weight to 80 parts by weight, 1 part by weight to 65 parts by weight, 3 parts by weight to 50 parts by weight, 5 parts by weight to 45 parts by weight, 10 parts by weight to 35 parts by weight, 10 parts by weight to 30 parts by weight, 15 parts by weight to 30 parts by weight, or 20 parts by weight to 30 parts by weight, relative to 100 parts by weight of the polyester copolymer.

### Additive

According to another embodiment of the present invention, the resin composition may further comprise an additive. The type of additive is not limited as long as it does not impair the object of the present invention. It may comprise at least one selected from the group consisting of, for example, rubber, inorganic fillers, antioxidants, stabilizers, thermal stabilizers, plasticizers, release agents, colorants, lubricants, weather stabilizers, foaming agents, rust inhibitors, wax, nucleating agents, fibrous reinforcing agents, and compatibilizers.

The lubricant may comprise at least one selected from the group consisting of silicone-based lubricants, wax-based lubricants, fluorine-based lubricants, surfactant-based lubricants, metal-based lubricants, metal salt-based lubricants, phosphorus-based lubricants, amide-based lubricants, ethylene-based lubricants, ester-based lubricants, alcohol-based lubricants, fatty acid-based lubricants, mineral-based lubricants, petroleum-based lubricants, and mixed-based lubricants. In addition, the lubricant may comprise at least one selected from the group consisting of stearic acid, glycerol stearate, zinc stearate, calcium stearate, magnesium acetate, magnesium stearate, and sodium stearate.

The thermal stabilizer may be used to prevent the resin from being decomposed due to the action of heat and light during the preparation process of the resin or during use. It may enhance the compatibility of the polyester copolymer with other additives or other resins, thereby minimizing side reactions that may take place at high temperatures during processes such as molding, to effectively control physical properties.

The thermal stabilizer may comprise metal thermal stabilizers such as calcium magnesium zinc-based thermal stabilizers, calcium zinc-based thermal stabilizers, organotin-based thermal stabilizers, metal tin-based thermal stabilizers, barium zinc-based thermal stabilizers, epoxy zinc-based thermal stabilizers, magnesium aluminum carbonate-based thermal stabilizers, zinc-based thermal stabilizers, and lead-based thermal stabilizers; and non-metal thermal stabilizers such as epoxy-based thermal stabilizers and organophosphite-based thermal stabilizers, but it is not limited thereto.

The antioxidant is an additive for preventing thermal oxidation and may comprise phenol-based, phosphorus-based, sulfur-based, or amine-based antioxidants.

The resin composition may comprise the additive in an amount of 0.1 part by weight to 50 parts by weight relative to 100 parts by weight of the polyester copolymer. For example, the content of the additive may be 0.2 part by weight to 30 parts by weight, 0.5 part by weight to 15 parts by weight, 0.8 part by weight to 10 parts by weight, or 1 part by weight to 5 parts by weight, relative to 100 parts by weight of the polyester copolymer.

According to another embodiment of the present invention, the resin composition may further comprise an additional resin. For example, the resin composition may further comprise an additional resin in addition to the polyester copolymer. It may comprise at least one selected from the group consisting of homopolymers or copolymers of monomers such as ethylene, butylene, pentene, butadiene, isoprene, chloroprene, styrene, α-methylstyrene, vinyl acetate, vinyl chloride, acrylic acid ester, methacrylic acid ester, and (meth)acrylonitrile; and a homopolymer, a random copolymer, a block copolymer, and a graft copolymer of a polyester such as polyurethane, polybutylene terephthalate (PBT), and polyethylene terephthalate (PET); polyacetal; polycarbonate; polysulfone; polyallyl sulfone; polyether sulfone; polyphenylene ether; polyether ketone; polyether ether ketone; polyimide; polyamideimide; polyether imide; silicone resins; epoxy resins; phenoxy resins; liquid crystal polymers; and polyaryl ether, but it is not limited thereto.

Specifically, the resin composition may further comprise at least one selected from the group consisting of polyethylene, polyethylene terephthalate, polybutylene terephthalate, and glycol-modified polyethylene terephthalate in an amount of 0.1 part by weight to 50 parts by weight, 0.5 part by weight to 25 parts by weight, 1 part by weight to 20 parts by weight, 5 parts by weight to 40 parts by weight, 10 parts by weight to 30 parts by weight, or 5 parts by weight to 10 parts by weight, relative to 100 parts by weight of the polyester copolymer.

### Process for preparing a polyester copolymer

The process for preparing a polyester copolymer according to an embodiment of the present invention comprises mixing a first dicarboxylic acid component comprising terephthalic acid or a derivative thereof, a second dicarboxylic acid component comprising cyclohexane dicarboxylic acid, dimethyl cyclohexane dicarboxylate, or a derivative thereof, and a diol component comprising ethylene glycol or a derivative thereof; subjecting the mixture to an esterification reaction; and subjecting the product of the esterification reaction to a polycondensation reaction, wherein the polyester copolymer comprises the second dicarboxylic acid component in an amount of 30% by mole or more based on the total dicarboxylic acid component.

A polyester copolymer prepared according to the process for preparing a polyester copolymer has substantially the same composition and characteristics as those of the polyester copolymer described above.

In addition, the composition and process conditions may be adjusted, so that the polyester copolymer finally prepared according to the process for preparing a polyester copolymer satisfies the mechanical properties such as softness and elasticity, optical properties such as transparency and UV stability, and characteristics such as processability as described above.

First, a first dicarboxylic acid component comprising terephthalic acid or a derivative thereof, a second dicarboxylic acid component comprising cyclohexane dicarboxylic acid, dimethyl cyclohexane dicarboxylate, or a derivative thereof, and a diol component comprising ethylene glycol or a derivative thereof are mixed.

Descriptions on the first dicarboxylic acid component, the second dicarboxylic acid component, and the diol component are as described above. Specifically, the first dicarboxylic acid component, the second dicarboxylic acid component, and the diol component are mixed to produce a mixture.

According to another embodiment of the present invention, at least one additive selected from the group consisting of a colorant, a crystallizing agent, an oxidation stabilizer, and a branching agent may be added to a mixture of the first dicarboxylic acid component, the second dicarboxylic acid component, and the diol component.

The colorant is an additive for enhancing the color characteristics of the polyester copolymer. Commonly used colorants such as cobalt acetate and cobalt propionate may be used as the colorant as long as the effects of the present invention are not impaired.

Specifically, the colorant may be cobalt acetate, cobalt propionate, anthraquinone-based compounds, perinone-based compounds, azo-based compounds, and methine-based compounds. Commercially available toners such as Polysynthren Blue RLS of Clariant or Solvaperm Red BB of Clariant may be used.

In addition, the polyester copolymer may comprise the colorant in an amount of 0.1 ppm to 30 ppm based on the total weight of the polyester copolymer. For example, the colorant may be employed in an amount of 0.2 ppm to 30 ppm, 0.5 ppm to 25 ppm, 0.6 ppm to 23 ppm, or 0.8 ppm to 20 ppm, based on the total weight of the mixture. As the content of the colorant satisfies the above range, the color characteristics of the polyester copolymer may be sufficiently enhanced without deteriorating its mechanical properties.

The oxidation stabilizer may comprise at least one selected from the group consisting of phosphorus-based, hindered phenol-based, phosphite-based, and thioether-based compounds.

In addition, the polyester copolymer may comprise the oxidation stabilizer in an amount of 50 ppm to 2,500 ppm based on the total weight of the polyester copolymer. For example, the oxidation stabilizer may be employed in an amount of 50 ppm to 2,300 ppm, 60 ppm to 2,200 ppm, 80 ppm to 2,100 ppm, 100 ppm to 2,000 ppm, or 100 ppm to 1,500 ppm, based on the total weight of the mixture. As the content of the oxidation stabilizer satisfies the above range, it is possible to effectively prevent a decrease in intrinsic viscosity that may occur in a subsequent process and to prevent a decrease in physical properties such as impact strength as well.

The branching agent may comprise at least one selected from the group consisting of trimellitic anhydride, trimethylol propane, trimellitic acid, and glycerol.

In addition, the polyester copolymer may comprise the branching agent in an amount of 10 ppm to 5,000 ppm based on the total weight of the polyester copolymer. For example, the branching agent may be employed in an amount of 20 ppm to 4,000 ppm or 30 ppm to 3,000 ppm, based on the total weight of the mixture. As the content of the branching agent satisfies the above range, the intrinsic viscosity may be more effectively controlled within a specific range, so that such physical properties as impact strength may be enhanced as well.

### Thereafter, the mixture is subjected to an esterification reaction.

Specifically, the mixture of the first dicarboxylic acid component, the second dicarboxylic acid component, and the diol component is subjected to an esterification reaction.

The esterification reaction may be carried out at normal pressure or a pressure higher than normal pressure by 0.1 kg/cm² to 3.0 kg/cm² and a temperature of 245°C to 275°C for 2 hours to 12 hours.

Specifically, the pressure may be higher than normal pressure by 0.1 kg/cm² to 3.0 kg/cm², 0.2 kg/cm² to 2.5 kg/cm², or 0.3 kg/cm² to 2.0 kg/cm². In addition, the esterification reaction may be carried out at a temperature of 150°C to 275°C, 155°C to 275°C, or 160°C to 270°C, for 2 hours to 12 hours, 2 hours to 11 hours, or 2.5 hours to 10 hours.

For example, the esterification reaction may be carried out at normal pressure or a pressure higher than normal pressure by 0.1 kg/cm² to 3.0 kg/cm², while the temperature is raised from room temperature to 150°C to 275°C or 155°C to 270°C over 30 minutes to 110 minutes or 30 minutes to 100 minutes, it is maintained for 0.5 hour to 3 hours or 0.5 hour to 2.5 hours, or the temperature is raised from room temperature to 150°C to 275°C or 155°C to 270°C over 2 hours to 12 hours continuously or stepwise.

Upon completion of the esterification reaction, the pressure of the reactor in a pressurized state is lowered to normal pressure, and then a polycondensation reaction to be described below may be carried out.

Finally, the product of the esterification reaction is subjected to a polycondensation reaction.

The polycondensation reaction may be carried out at a pressure of 0.00001 mmHg to 400 mmHg and a temperature of 240°C to 300°C for 1 hour to 12 hours. For example, the polycondensation reaction may be carried out at a pressure of 0.00001 mmHg to 200 mmHg, 0.0001 mmHg to 100 mmHg, 0.001 mmHg to 50 mmHg, 0.002 mmHg to 10 mmHg, 0.005 mmHg to 3 mmHg, 0.01 mmHg to 1.5 mmHg, or 0.01 mmHg to 1.2 mmHg, and a temperature of 240°C to 300°C or 245°C to 295°C, for 1 hour to 12 hours or 1 hour to 10 hours.

Specifically, the polycondensation reaction may be carried out by reducing the pressure of the product of the esterification reaction to 4.0 mmHg to 6.0 mmHg or 4.5 mmHg to 5.5 mmHg over 20 minutes to 40 minutes or 25 minutes to 35 minutes, raising the temperature to 240°C to 300°C or 245°C to 295°C over 0.5 hour to 2 hours or 0.7 hour to 1.2 hours, and maintaining a pressure of 0.01 mmHg to 400 mmHg.

At the beginning of the polycondensation reaction, the stirring speed may be set high. As the polycondensation reaction proceeds, when the stirring power is weakened due to the increase in the viscosity of the reactant or the temperature of the reactant rises above the set temperature, the stirring speed may be appropriately adjusted accordingly.

The melt produced by the polycondensation reaction may have an intrinsic viscosity (IV) of 0.5 dl/g to 1.3 dl/g. For example, the polycondensation reaction may be carried out until the intrinsic viscosity (IV) of the melt produced by the polycondensation reaction reaches 0.5 dl/g to 1.2 dl/g or 0.6 dl/g to 1.15 dl/g.

In addition, a catalyst and/or a stabilizer may be further added in the esterification reaction and the polycondensation reaction.

For example, the catalyst for the esterification reaction may be methylates of sodium and magnesium; acetates, borates, fatty acid salts, and carbonates of Zn, Cd, Mn, Co, Ca, and Ba; metallic Mg; and oxides of Pb, Zn, Sb, and Ge.

In addition, the catalyst for the polycondensation reaction may be, for example, titanium-based catalysts such as tetraethyl titanate, acetyl tripropyl titanate, tetrapropyl titanate, tetrabutyl titanate, polybutyl titanate, 2-ethylhexyl titanate, octylene glycol titanate, lactate titanate, triethanolamine titanate, acetyl acetonate titanate, ethyl acetoacetic ester titanate, isostearyl titanate, titanium dioxide, titanium dioxide/silicon dioxide copolymers, titanium dioxide/zirconium dioxide copolymers; germanium-based catalysts such as germanium dioxide and copolymers using the same; or tin-based catalysts such as monobutyltin oxide, dibutyltinoxide, and monobutylhydroxytinoxide.

In addition, the stabilizer may be a phosphorus-based compound such as phosphoric acid, trimethyl phosphate, and triethyl phosphate, but it is not limited thereto.

The stabilizer may be employed in an amount of 10 ppm to 2,500 ppm based on the total weight of the polycondensation reactant. For example, the stabilizer may be employed in an amount of 150 ppm to 2,300 ppm, 200 ppm to 2,000 ppm, 300 ppm to 1,500 ppm, 50 ppm to 400 ppm, 70 ppm to 350 ppm, or 100 ppm to 300 ppm, based on the total weight of the polycondensation reactant.

According to another embodiment of the present invention, the process for preparing the polyester copolymer may comprise a melt-blending step.

Specifically, an elastomer or a resin may be added and melt blended after the polycondensation reaction. More specifically, after the above polycondensation reaction, the vacuum is released using nitrogen gas, and then an elastomer or a resin may be further added and melt blended.

As a specific example, the elastomer added in the melt-blending step may be at least one selected from the group consisting of polyvinyl chloride-based elastomers, polyolefin-based elastomers, polyurethane-based elastomers, thermoplastic polyester-based elastomers, polyamide-based elastomers, and polybutadiene-based elastomers. The resin may be at least one selected from the group consisting of polyethylene, polyethylene terephthalate, polybutylene terephthalate, and glycol-modified polyethylene terephthalate.

In addition, the melt-blending step may be carried out at 250°C to 290°C, 255°C to 285°C, or 260°C to 280°C for 1 minute to 60 minutes, 2 minutes to 40 minutes, 2 minutes to 20 minutes, or 3 minutes to 10 minutes.

As the melt-blending step is carried out, there is an advantageous effect in terms of improving thermal resistance, dimensional stability, and chemical resistance by virtue of imparted crystallinity.

### Process for preparing a resin composition

According to another embodiment of the present invention, a polyester copolymer and a plasticizer are mixed to prepare a resin composition.

As a specific example, a polyester copolymer and a plasticizer are mixed to prepare a first composition. The first composition is automatically metered and fed to the hopper of a twin-screw extruder (40 mm extruder, L/D: 40), volatile gases are removed at a reduced pressure, and a resin composition in the form of pellets is prepared using a chip cutter.

### Molded article

The molded article according to another embodiment of the present invention is prepared from the resin composition.

For example, the molded article may be prepared by extruding or kneading the resin composition and may be molded through calendaring, extrusion, or injection, but it is not limited thereto.

The molded article may be in the form of a sheet, a film, or a fiber. For example, the molded article may be food/beverage containers, sheets for packaging, soundproofing, or sound-absorbing materials, tarpaulin, silk wallpaper, artificial leather, wrap, medical devices, decorative sheets, filament for 3D printers, or films such as decorative films or mulching films, but it is not limited thereto. In addition, the resin composition may also be used as a binder for fibers, a coating agent, an adhesive, and the like.

Hereinafter, the present invention will be described in more detail with reference to the following examples. However, these examples are set forth to illustrate the present invention, and the scope of the present invention is not limited thereto.

### Mode for the Invention

### [Example]

### Preparation of a polyester copolymer

### Preparation Example 1

### (1) Esterification reaction

A 10-liter reactor equipped with a column and a condenser for cooling with water was charged with 569 g (3.425 moles) of terephthalic acid (TPA), 1,600 g (7.992 moles) of dimethyl cyclohexane dicarboxylate (DMCD), and 1,417 g (22.834 moles) of ethylene glycol (EG). Here, G/A (total diol/total diacid; molar ratio of the diol component to the dicarboxylic acid or its derivative component) was 2.0.

Thereafter, 0.853 g of tetrabutyl titanate (TBT) as a catalyst, 0.235 g of phosphoric acid as a stabilizer, and 1.47 g of trimellitic anhydride as a branching agent were added thereto, followed by stirring thereof.

Thereafter, nitrogen was injected into the reactor containing the composition to make the pressure in the reactor higher than normal pressure by 1.0 kgf/cm² (absolute pressure: 1,495.6 mmHg). Then, the temperature of the reactor was raised from room temperature to 200°C over 60 minutes and maintained at 200°C for 2 hours, and the temperature was then raised again to 245°C over 5 hours. Thereafter, an esterification reaction was carried out at a temperature of 245°C for 0.5 hour. In this procedure, byproducts were discharged through the column and condenser. Upon completion of the esterification reaction, nitrogen in the pressurized reactor was purged to the outside to lower the pressure in the reactor to normal pressure, and the product of the esterification reaction in the reactor was then transferred to a 7-liter reactor capable of a reaction under vacuum.

### (2) Polycondensation reaction

Thereafter, the pressure of the reactor containing the product of the esterification reaction was reduced from normal pressure to 5.0 Torr (absolute pressure: 5 mmHg) over 30 minutes. At the same time, the temperature of the reactor was raised to 270°C over 1 hour, and a polycondensation reaction was carried out while the pressure of the reactor was maintained at 1.0 Torr (absolute pressure: 1.0 mmHg) or less. Here, the stirring speed was set high at the beginning of the polycondensation reaction. As the polycondensation reaction proceeded, when the stirring power was weakened due to the increase in the viscosity of the reactant or the temperature of the reactant rose above the set temperature, the stirring speed was appropriately adjusted accordingly. The polycondensation reaction was carried out until the intrinsic viscosity (IV) of the mixture (melt) in the reactor reached 0.8 dl/g or more. Upon completion of the polycondensation reaction, the vacuum was released using nitrogen gas, and 750 g of poly(butylene terephthalate) (PBT) was added, which was melt blended at 270°C for 10 minutes. The mixture was discharged outside the reactor, solidified with a cooling liquid, and then granulated to an average weight of about 10 mg to 20 mg to produce a polyester copolymer.

### Preparation Example 2

### (1) Esterification reaction

A 10-liter reactor equipped with a column and a condenser for cooling with water was charged with 569 g (3.425 moles) of terephthalic acid (TPA), 1,600 g (7.992 moles) of dimethyl cyclohexane dicarboxylate (DMCD), and 1,417 g (22.834 moles) of ethylene glycol (EG). Here, G/A (total diol/total diacid; molar ratio of the diol component to the dicarboxylic acid or its derivative component) was 2.0.

Thereafter, 0.853 g of tetrabutyl titanate (TBT) as a catalyst, 0.235 g of phosphoric acid as a stabilizer, and 1.47 g of trimellitic anhydride as a branching agent were added thereto, followed by stirring thereof.

Thereafter, nitrogen was injected into the reactor containing the composition to make the pressure in the reactor higher than normal pressure by 1.0 kgf/cm² (absolute pressure: 1,495.6 mmHg). Then, the temperature of the reactor was raised from room temperature to 200°C over 60 minutes and maintained at 200°C for 2 hours, and the temperature was then raised again to 245°C over 5 hours. Thereafter, an esterification reaction was carried out at a temperature of 245°C for 0.5 hour. In this procedure, byproducts were discharged through the column and condenser. Upon completion of the esterification reaction, nitrogen in the pressurized reactor was purged to the outside to lower the pressure in the reactor to normal pressure, and the product of the esterification reaction in the reactor was then transferred to a 7-liter reactor capable of a reaction under vacuum.

### (2) Polycondensation reaction

Thereafter, the pressure of the reactor containing the product of the esterification reaction was reduced from normal pressure to 5.0 Torr (absolute pressure: 5 mmHg) over 30 minutes. At the same time, the temperature of the reactor was raised to 270°C over 1 hour, and a polycondensation reaction was carried out while the pressure of the reactor was maintained at 1.0 Torr (absolute pressure: 1.0 mmHg) or less. Here, the stirring speed was set high at the beginning of the polycondensation reaction. As the polycondensation reaction proceeded, when the stirring power was weakened due to the increase in the viscosity of the reactant or the temperature of the reactant rose above the set temperature, the stirring speed was appropriately adjusted accordingly. The polycondensation reaction was carried out until the intrinsic viscosity (IV) of the mixture (melt) in the reactor reached 0.8 dl/g or more. Upon completion of the polycondensation reaction, the vacuum was released using nitrogen gas, and 250 g of a thermoplastic polyester elastomer (TPEE) was added, which was melt blended at 270°C for 10 minutes. The mixture was discharged outside the reactor, solidified with a cooling liquid, and then granulated to an average weight of about 10 mg to 20 mg to produce a polyester copolymer.

### Preparation Example 3

### (1) Esterification reaction

A 10-liter reactor equipped with a column and a condenser for cooling with water was charged with 569 g (3.425 moles) of terephthalic acid (TPA), 1,600 g (7.992 moles) of dimethyl cyclohexane dicarboxylate (DMCD), and 1,417 g (22.834 moles) of ethylene glycol (EG). Here, G/A (total diol/total diacid; molar ratio of the diol component to the dicarboxylic acid or its derivative component) was 2.0.

Thereafter, 0.853 g of tetrabutyl titanate (TBT) as a catalyst, 0.235 g of phosphoric acid as a stabilizer, and 1.47 g of trimellitic anhydride as a branching agent were added thereto, followed by stirring thereof.

Thereafter, nitrogen was injected into the reactor containing the composition to make the pressure in the reactor higher than normal pressure by 1.0 kgf/cm² (absolute pressure: 1,495.6 mmHg). Then, the temperature of the reactor was raised from room temperature to 200°C over 60 minutes and maintained at 200°C for 2 hours, and the temperature was then raised again to 245°C over 5 hours. Thereafter, an esterification reaction was carried out at a temperature of 245°C for 0.5 hour. In this procedure, byproducts were discharged through the column and condenser. Upon completion of the esterification reaction, nitrogen in the pressurized reactor was purged to the outside to lower the pressure in the reactor to normal pressure, and the product of the esterification reaction in the reactor was then transferred to a 7-liter reactor capable of a reaction under vacuum.

### (2) Polycondensation reaction

Thereafter, the pressure of the reactor containing the product of the esterification reaction was reduced from normal pressure to 5.0 Torr (absolute pressure: 5 mmHg) over 30 minutes. At the same time, the temperature of the reactor was raised to 270°C over 1 hour, and a polycondensation reaction was carried out while the pressure of the reactor was maintained at 1.0 Torr (absolute pressure: 1.0 mmHg) or less. Here, the stirring speed was set high at the beginning of the polycondensation reaction. As the polycondensation reaction proceeded, when the stirring power was weakened due to the increase in the viscosity of the reactant or the temperature of the reactant rose above the set temperature, the stirring speed was appropriately adjusted accordingly. The polycondensation reaction was carried out until the intrinsic viscosity (IV) of the mixture (melt) in the reactor reached 0.8 dl/g or more. The mixture was discharged outside the reactor, solidified with a cooling liquid, and then granulated to an average weight of about 10 mg to 20 mg to produce a polyester copolymer.

### Preparation of a resin composition

### Examples 1 to 13 and Comparative Examples 1 to 5

The components shown in Table 1 below were uniformly mixed as shown in Tables 2 to 4 below to prepare a resin composition. The resin composition was automatically metered and fed to the hopper of a twin-screw extruder (40 mm extruder, L/D: 40), volatile gases were removed at a reduced pressure, and the composition was prepared into a pellet form using a chip cutter. In such an event, information on the components used in the Examples and Comparative Examples is shown in Table 1 below. The values shown in Tables 2 to 4 below refer to parts by weight.

**[Table 1]**

| | Characteristic |
|---|---|
| Polyester copolymer (A-1) | Prep. Ex. 1 (DMCD 70% by mole + PBT) |
| Polyester copolymer (A-2) | Prep. Ex. 2 (DMCD 70% by mole + TPEE) |
| Polyester copolymer (A-3) | Prep. Ex. 3 (DMCD 70% by mole) |
| Plasticizer (B-1) | Dioctyl terephthalate (67%-72%) |
| Plasticizer (B-2) | Adipic acid polyester |
| Plasticizer (B-3) | Di(2-ethylhexyl)cyclohexane-1,4-dicarboxylate |
| Elastomer (C-1) | Styrene ethylene/butylene block copolymer |
| Elastomer (C-2) | Methacrylate butadiene styrene |
| Polyester elastomer (C-3) | TPEE |
| Polyethylene (D-1) | PE, manufacturer: Hanwha Solutions |
| Polyethylene terephthalate (D-2) | PET, manufacturer: Lotte Chemical |
| Polybutylene terephthalate (D-3) | PBT, manufacturer: CHANG CHUN PLASTICS |
| Glycol-modified polyethylene terephthalate (D-4) | PETG, manufacturer: SK Chemical |
| Lubricant (E) | Stearic acid |

**[Table 2]**

| | Ex. 1 | Ex. 2 | Ex. 3 | Ex. 4 | Ex. 5 | Ex. 6 | Ex. 7 | Ex. 8 |
|---|---|---|---|---|---|---|---|---|
| A-1 | 100 | 100 | 100 | 100 | 100 | 100 | 100 | 100 |
| B-1 | 5 | 30 | 50 | 30 | - | - | 30 | 30 |
| B-2 | - | - | - | - | 30 | - | - | - |
| B-3 | - | - | - | - | - | 30 | - | - |
| C-1 | - | 20 | 30 | - | 20 | 20 | 20 | 20 |
| C-2 | - | - | - | 20 | - | - | - | - |
| C-3 | - | - | - | - | - | - | 10 | 10 |
| E | - | - | - | - | - | - | - | 1 |

**[Table 3]**

| | Ex. 9 | Ex. 10 | Ex. 11 | Ex. 12 | Ex. 13 |
|---|---|---|---|---|---|
| A-2 | 100 | 100 | 100 | 100 | - |
| A-3 | - | - | - | - | 100 |
| B-1 | 30 | 30 | 30 | 30 | 30 |
| C-1 | 20 | 20 | 20 | 20 | 30 |
| D-1 | 30 | - | - | - | - |
| D-2 | - | 10 | - | - | - |
| D-3 | - | - | 30 | - | - |

**[Table 4]**

| | Com. Ex. 1 | Com. Ex. 2 | Com. Ex. 3 | Com. Ex. 4 | Com. Ex. 5 |
|---|---|---|---|---|---|
| A-1 | 100 | - | - | - | - |
| A-2 | - | 100 | - | - | - |
| A-3 | - | - | 100 | - | - |
| B-1 | - | - | - | 30 | 30 |
| C-1 | - | - | - | 20 | 20 |
| D-2 | - | - | - | - | 100 |
| D-4 | - | - | - | 100 | - |

### [Test Example]

### Test Example 1: Compatibility of strands after extrusion

When pellets were produced using each resin composition of Examples 1 to 13 and Comparative Examples 4 and 5, compatibility was evaluated based on the state of strands discharged from the extruder. If the surface of the strand was smooth and there was no problem with the process, and thus there was no problem with pellet formation, it is marked with ○. If the surface of the strand was rough or pellet formation was difficult through the process, it is marked with ×. Since no plasticizer was used in Comparative Examples 1 to 3, the compatibility of the strands after extrusion was not evaluated.

### Test Example 2: Plasticizer migration

The resin compositions of Examples 1 to 13 and Comparative Examples 4 and 5 were each used to prepare flat specimens having a thickness of 1 mm, and a polyimide film was interposed between the specimens. It was then observed whether migration took place, in which a liquid plasticizer moved or was extracted to the surface of the film. If migration of the plasticizer was observed on the surface of the film, it was marked with ∘. If no migration of the plasticizer was observed on the surface of the film, it was marked with ×. Since no plasticizer was used in Comparative Examples 1 to 3, the migration of the plasticizer was not evaluated.

### Test Example 3: Shore A hardness

The resin compositions of Examples 1 to 13 and Comparative Examples 1 to 5 were each used to prepare flat specimens having a thickness of 1 mm. Six identical specimens prepared were placed overlapping each other, and the Shore A hardness was measured according to ASTM D2240.

**[Table 5]**

| | Ex. 1 | Ex. 2 | Ex. 3 | Ex. 4 | Ex. 5 | Ex. 6 | Ex. 7 | Ex. 8 |
|---|---|---|---|---|---|---|---|---|
| Compatibility of strands upon extrusion | ○ | ○ | ○ | ○ | ○ | ○ | ○ | ○ |
| Plasticizer migration | × | × | × | × | × | × | × | × |
| Shore A hardness | 90 | 75 | 65 | 77 | 85 | 95 | 77 | 76 |

**[Table 6]**

| | Ex. 9 | Ex. 10 | Ex. 11 | Ex. 12 | Ex. 13 |
|---|---|---|---|---|---|
| Compatibility of strands upon extrusion | ○ | ○ | ○ | ○ | ○ |
| Plasticizer migration | × | × | × | × | × |
| Shore A hardness | 70 | 73 | 75 | 40 | 38 |

**[Table 7]**

| | Com. Ex. 1 | Com. Ex. 2 | Com. Ex. 3 | Com. Ex. 4 | Com. Ex. 5 |
|---|---|---|---|---|---|
| Compatibility of strands upon extrusion | - | - | - | × | × |
| Plasticizer migration | N/A | N/A | N/A | ○ | ○ |
| Shore A hardness | >95 | 95 | 95 | >95 | >95 |

As shown in Tables 5 to 7 above, the resin compositions of Examples 1 to 13 were able to form pellets with a smooth surface of the strands upon extrusion and without any process problems. The Shore A hardness of the specimens prepared using the same was less than 95, and migration of a liquid plasticizer was not observed on the surface of the specimens.

In contrast, Comparative Examples 1 to 5 had a Shore A hardness of 95 or more. In particular, Comparative Examples 4 and 5 showed a rough surface of the strands upon extrusion, and the physical properties were not sufficient to allow the process of preparing pellets to be carried out without problems, making it difficult to form pellets. Migration of a liquid plasticizer was also observed on the surface of the specimens prepared therefrom.

## Claims

1. A resin composition, which comprises a polyester copolymer and a plasticizer, wherein the plasticizer is employed in an amount of 0.1 part by weight to 50 parts by weight relative to 100 parts by weight of the polyester copolymer, and the Shore A hardness of a specimen prepared from the resin composition is less than 95 as measured according to ASTM D2240.

2. The resin composition of claim 1, wherein the polyester copolymer comprises a residue of a first dicarboxylic acid component comprising terephthalic acid or a derivative thereof;
a residue of a second dicarboxylic acid component comprising cyclohexane dicarboxylic acid, dimethyl cyclohexane dicarboxylate, or a derivative thereof; and
a residue of a diol component comprising ethylene glycol or a derivative thereof,
wherein the second dicarboxylic acid component is employed in an amount of 30% by mole or more based on the total dicarboxylic acid component.

3. The resin composition of claim 2, wherein the second dicarboxylic acid component is employed in an amount of 50% by mole or more based on the total dicarboxylic acid component.

4. The resin composition of claim 2, wherein the second dicarboxylic acid component comprises dimethyl cyclohexane dicarboxylate or a derivative thereof, and the dimethyl cyclohexane dicarboxylate or a derivative thereof is employed in an amount of 60% by mole or more based on the total dicarboxylic acid component.

5. The resin composition of claim 2, which comprises a residue of a third dicarboxylic acid component comprising at least one selected from the group consisting of succinic acid, adipic acid, sebacic acid, azelaic acid, dodecanoic acid, isophthalic acid, orthophthalic acid, naphthalenedicarboxylic acid, dimethyl terephthalate, dimethyl isophthalate, diethyl terephthalate, diethyl isophthalate, dibutyl terephthalate, and dibutyl isophthalate.

6. The resin composition of claim 2, which comprises a residue of a first diol component comprising the ethylene glycol or a derivative thereof, and a residue of a second diol component comprising at least one selected from the group consisting of propanediol, butanediol, pentanediol, hexanediol, cyclohexanedimethanol, neopentyl glycol, diethylene glycol, and triethylene glycol.

7. The resin composition of claim 6, wherein the molar ratio of the first diol component is 80% by mole or more.

8. The resin composition of claim 1, wherein the polyester copolymer is a block copolymer or a random copolymer.

9. The resin composition of claim 1, wherein the polyester copolymer further comprises a polybutylene terephthalate (PBT) or a thermoplastic polyester elastomer (TPEE).

10. The resin composition of claim 1, wherein the plasticizer comprises at least one selected from the group consisting of phthalate-based, terephthalate-based, adipate-based, carboxylate-based, citric acid-based, trimellitate-based, phosphite-based, epoxy-based, ester-based, polyester-based, aliphatic-based, antichlorine-based, vegetable oil derivatives, petroleum-based, hydrocarbon-based, acid-based, and alcohol-based plasticizers.

11. The resin composition of claim 1, wherein the resin composition further comprises at least one selected from the group consisting of polyvinyl chloride-based elastomers, polyolefin-based elastomers, polyurethane-based elastomers, thermoplastic polyester-based elastomers, polyamide-based elastomers, and polybutadiene-based elastomers.

12. The resin composition of claim 1, wherein the resin composition comprises at least one selected from the group consisting of polyethylene, polyethylene terephthalate, polybutylene terephthalate, and glycol-modified polyethylene terephthalate.

13. The resin composition of claim 1, wherein the resin composition comprises at least one selected from the group consisting of rubber, inorganic fillers, antioxidants, stabilizers, thermal stabilizers, plasticizers, release agents, colorants, lubricants, weather stabilizers, foaming agents, rust inhibitors, wax, nucleating agents, fibrous reinforcing agents, and compatibilizers.

14. A molded article, which is prepared by molding the resin composition of any one of claims 1 to 13.

15. The molded article of claim 14, wherein the molded article has been molded through calendaring, extrusion, or injection.

16. The molded article of claim 14, wherein the molded article is in the form of a sheet, a film, or a fiber.

17. The molded article of claim 14, wherein the molded article is a food/beverage container, a sheet for packaging, soundproofing, or sound-absorbing materials, tarpaulin, silk wallpaper, artificial leather, wrap, a medical device, a decorative sheet, filament for 3D printers, or a film such as a decorative film or a mulching film.
